# EUROPEAN PATENT SPECIFICATION

(11) **EP 1 590 578 B1**
(45) Date of publication and mention of the grant of the patent: **01.08.2007**
(21) Application number: 03715346.7
(22) Date of filing: 13.03.2003
(51) Int. Cl.: F16D 65/21, B60T 13/74

(54) **DISK BRAKE CALIPER**
BREMSSATTEL FÜR EINE SCHEIBENBREMSE
ETRIER DE FREIN A DISQUE

(43) Date of publication of application: 02.11.2005
(73) Proprietor: Freni Brembo S.p.A., 24035 Curno (Bergamo) (IT)
(72) Inventor: TEMPESTINI, Serge, I-24035 Curno, BERGAMO (IT); CARRARA, Marco, I-20062 Cassano D'Adda, MILANO (IT)
(74) Representative: Vittorangeli, Lucia
(86) International application number: PCT/IT2003/000153
(87) International publication number: WO 2004/081404

(56) References cited:
- WO-A-00/29764
- WO-A-00/60255
- DE-A- 19 945 543
- US-B1- 6 230 854

## Description

. This invention relates to a caliper for a disk brake, in particular a disk brake of the electromechanical type which is suitable for operation by an electric motor.

. Calipers for disk brakes of the electromechanical type illustrated and described for example in patent applications WO 00/29760, WO 00/02302, WO 00/29764, WO 99/21266, WO 00/60255, WO OO/45064, WO 99/37939 and WO 99/37010 are known. US 6,230,854 discloses an electromechanically operable disc brake for automotive vehicles which comprises a floating caliper as well as an actuating unit arranged on the caliper. The actuating unit includes an electric motor which, by the intermediary of a reduction gear, readjusts an actuating element which is used to move one of two friction linings that are slidable in the brake caliper into engagement with a brake disc.

. Known electromechanical brakes have the disadvantage that they are rather bulky, particularly in a longitudinal direction, that is in a direction perpendicular to the braking surfaces of the pads.

. In addition to this, known brakes give rise to difficulties with assembly, compliance with tolerances and alignment of the components of which they are made up, requiring both high costs and long production times .

. Also, both the layout and the shapes of the components making up known brakes of , the electromechanical type have an adverse effect on both effectiveness of transmission of the electric motor's motion and the efficiency of braking.

.The solutions proposed hitherto are not very effective and are still rather bulky.

. The purpose of this invention is to devise and provide a caliper for a disk brake which makes it possible to overcome the disadvantages relating to the known art complained of above.

.This object is achieved through a caliper for a disk brake in accordance with claim 1.

. Other advantages and characteristics of the present invention will become clear from the following detailed description which is given with reference to the appended drawings which are provided purely by way of non-limiting example and in which:

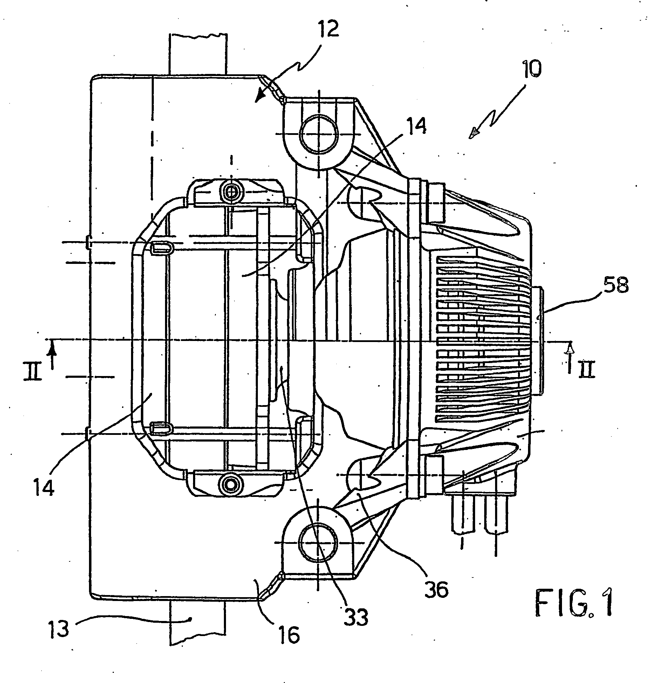

. Figure 1 illustrates a plan view of a disk brake according to this invention,

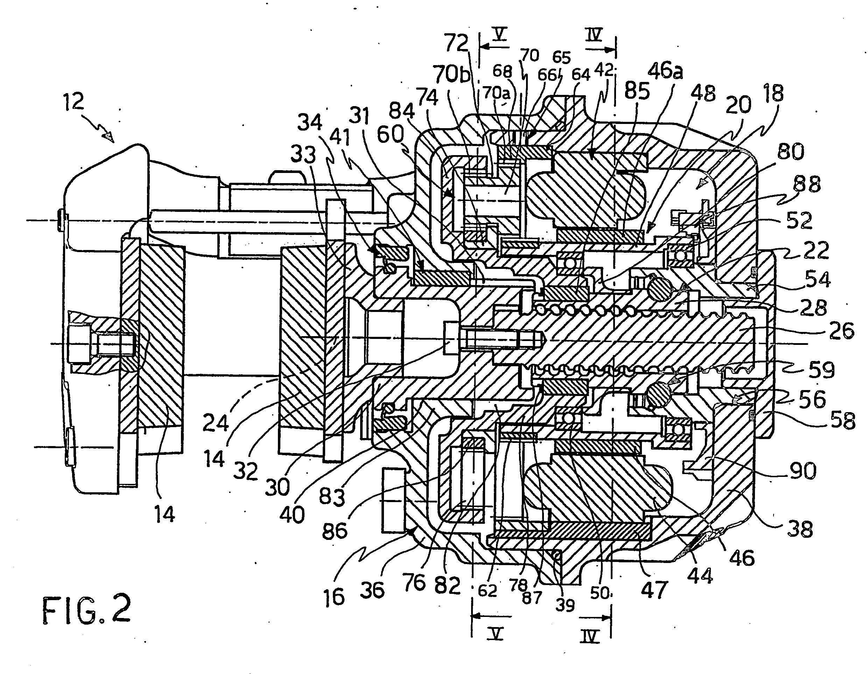

. Figure 2 illustrates a view in cross-section along the line II-II in Figure 1 of the caliper of the disk brake in Figure 1, in which the disk has been omitted for simplicity of illustration,

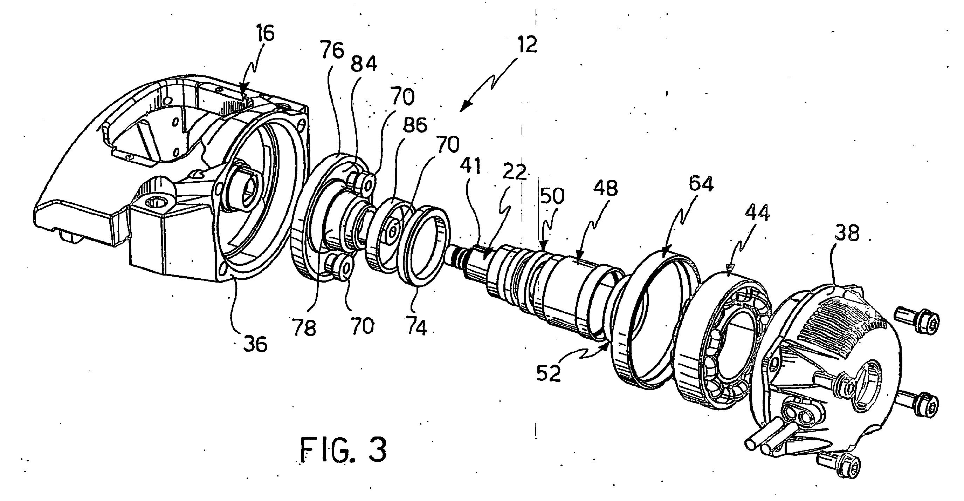

. Figure 3 illustrates an exploded perspective view of the caliper for a disk brake according to this invention,

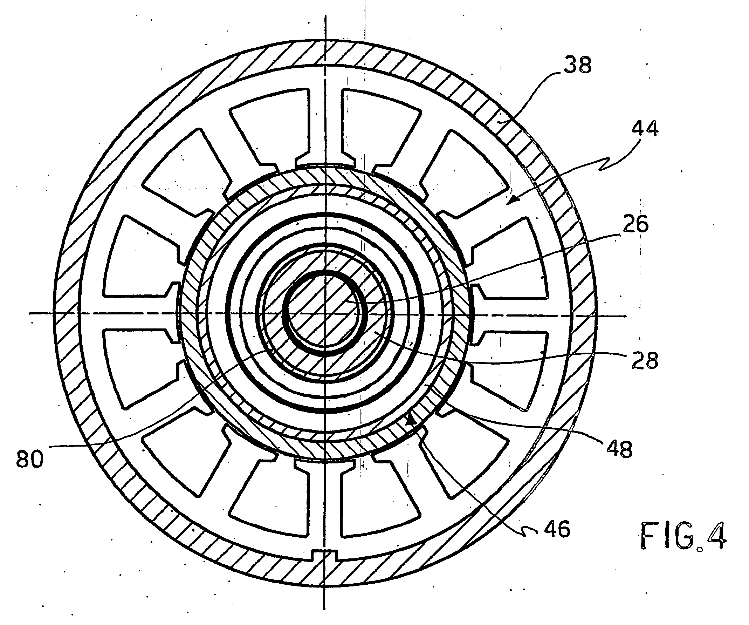

. Figure 4 illustrates a view in cross-section along the line IV-IV in Figure 2 of the caliper for a disk brake in Figure 1,

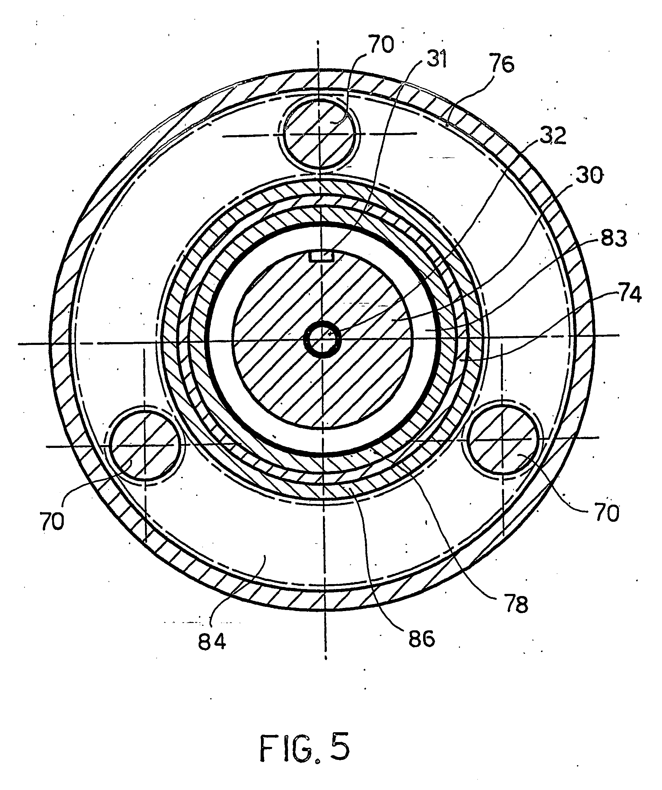

. Figure 5 illustrates a view in cross-section along the line V-V in Figure 2 of the caliper for a disk brake in Figure 1,

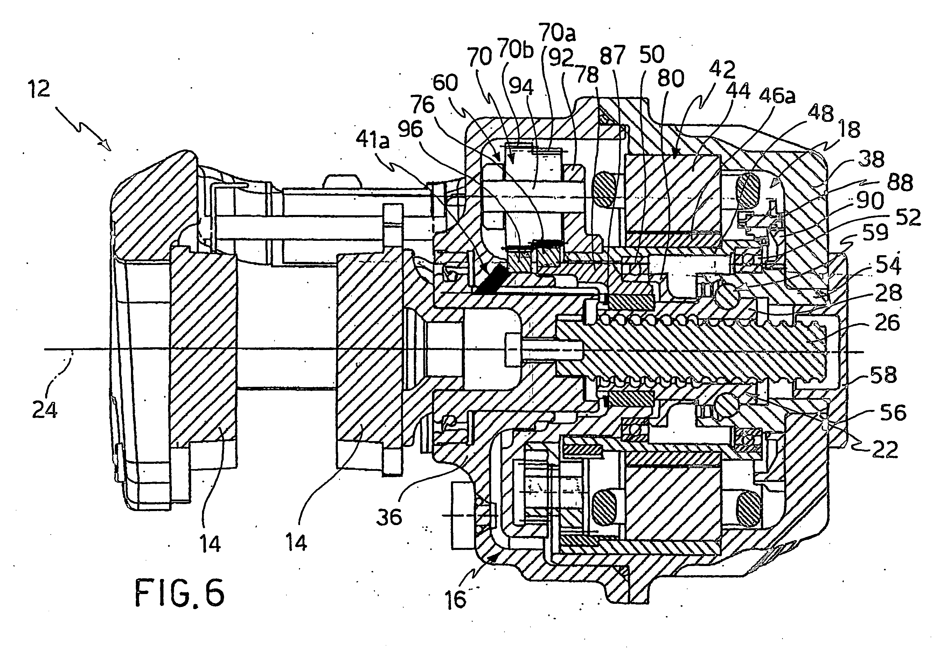

. Figure 6 illustrates a possible variant embodiment of the caliper for a disk brake in Figure 2.

. With reference to the aforesaid figures, and in particular Figure 1, 10 indicates a disk brake as a whole, and in particular a disk brake operated by an electric motor as will be described below.

. With reference to Figures 1-5, the disk brake according to this invention comprises a caliper 12 which can be mounted on a portion of a vehicle, such as for example a suspension, and a disk 13 which can be associated with a wheel of the vehicle in such a way that it can be caused to rotate jointly with it. In particular caliper 12 is capable of being located so that it straddles the aforesaid disk and comprises pads 14, which, when the calipers and disk are fitted to form disk brake 10, face opposite braking surfaces of the aforesaid disk. The said pads are mounted on a caliper body 16 in such a way that they can be pressed against the opposite braking surfaces of the disk to exert a braking effect on the vehicle.

.In accordance with an advantageous embodiment illustrated in the figures, caliper 12 is of the fixed type and is associated with a disk 13 of the floating type. In other words the disk brake is such that the thrust force exerted on one of the pads causes lateral movement of the disk against the other pad.

. Caliper body 16 -comprises a housing 18 which contains operating means 20 which are capable of exerting the thrust force on the pads and as a consequence the braking effect on the vehicle.

. In accordance with a possible embodiment, operating means 20 comprise a screw and nut mechanism 22 extending along a longitudinal axis indicated by reference 24. 26 indicates the screw.in said mechanism 22, while 28 indicates the nut in that mechanism 22. Preferably this is a mechanism comprising a screw in which ball bearings recirculate.

.In accordance with a possible embodiment, for example illustrated in the figures, aforesaid mechanism 22 is housed within housing 18 so that screw 26 can move along longitudinal axis 24 while nut 28 is mounted in such a way that it can be caused to rotate about the said longitudinal axis 24 with respect to aforesaid housing 18.

. In accordance with a possible embodiment in which screw 26 is capable of being caused to move laterally along axis 24, aforesaid screw 26 is operatively associated with at least one of pads 14. In the example illustrated in the figure, the end of screw 26 facing the corresponding pad is associated with a head member or piston 30. Piston 30 has a shape which is preferably substantially axially symmetrical with a longitudinal groove 31. The coupling between screw 26 and piston 30 is preferably provided by a threaded connection 32 and possibly an interlocking coupling.

. In accordance with a possible embodiment, a force distributor 33 is provided between piston 30 and corresponding pad 14.

. In accordance with a possible embodiment, seals 34 isolate the space defined by housing 18 with respect to the external environment, and in particular with respect to the environment in which the pads and disk operate.

.In accordance with a possible embodiment, housing 18 is defined by first walls 36 which are made of one piece with caliper body 16 and second walls which also define a cover 38 which closes off the space defined by housing 18. In accordance with a possible embodiment, first walls 36 also define a cylindrical seat 40 located along longitudinal axis 24 to house head member 30 connected to screw 26. In accordance with a possible embodiment, rotation-preventing means 41 operatively located between first walls 36 and piston 30 are associated' with cylindrical seat 40. In the situation in which piston 30 has longitudinal groove 31, rotation-preventing means 41 may comprise a key (Figure 2) or a pin inserted into first walls 36, preferably in a seat which is inclined with respect to longitudinal axis 24, and which can be partly inserted into groove 31 of piston 30 (Figure 6).

.In accordance with a possible embodiment, sealing means 39 are placed between a free edge of first walls 36 and cover 38.

. Operating means 20 also comprise an electric motor, generically indicated by reference 42, substantially defined by a stator 44 and a rotor 46. The stator and rotor are advantageously constructed in such a way that they can be placed concentrically about each other within housing 18 and can rotate screw and nut mechanism 22 preferably coaxially. In other words, screw and nut mechanism 22, rotor 46 and stator 44 are located in the same axial portion, preferably in sequence in a radially increasing direction. Again in other words screw and nut mechanism 22, rotor 46 and stator 44 are respectively housed within each other, with motor 42 which externally encloses screw and nut mechanism 22.

.In accordance with a possible embodiment, stator 44 is inserted within cover 38 with an interference fit in a specific axial position. A key 47 which prevents stator 44 from rotating about longitudinal axis 24 and with respect to cover 38 is also provided.

.In accordance with a possible embodiment, rotor 46 comprises an annular magnet 46a and a sleeve 48 having a substantially cylindrical structure located within housing 18, preferably in such a way as to externally enclose screw and nut mechanism 22. In other words sleeve 48 has transverse dimensions which are larger than the transverse dimensions of screw and nut mechanism 22, so that the latter is substantially housed within it.

. Sleeve 48, and therefore rotor 46, have seats for housing rolling support members, such as bearings, a first bearing of which is indicated by reference 50 while a second or further bearing is indicated by reference 52.

. In accordance with a possible embodiment, rotor 46 and corresponding sleeve 48, if present, are mounted to rotate with respect to a portion of support 54 which also defines a seat for second bearing 52. This supporting portion 54 is operatively associated with, housing 18 and preferably associated with cover 38 on the opposite side to pads 14.

. In accordance with a possible embodiment, supporting portion 54 comprises a member having a substantially cylindrical structure inserted into an opening 56 provided in said cover 38 and extending within aforesaid housing 18. Advantageously, a closure member 58 which fits onto cover 38 within opening 56 is provided.

.With a substantially cylindrical structure, in particular of supporting member 54, it is not ruled out that portions having different diameters such as is for example illustrated in the figures may be provided.

. In accordance with a possible embodiment, supporting portion 54 has a hollow structure defined by walls which externally define at least one seat for further bearing 52 and internally define at least one seat for further rolling supporting member 59, such as for example a thrust bearing placed between supporting portion 54 and nut 28.

.In the case where supporting portion 54 is hollow, closure member 58 is designed to be inserted into the internal cavity, defined by the aforesaid supporting portion 54 so as to isolate the internal environment from housing 18.

.Operating means 20 also include reduction gear means 60 operatively located between aforesaid rotor 46 and, in the example illustrated, aforesaid nut 28.

. In accordance with a possible embodiment, rotor 46, or more particularly sleeve 48 if present, comprises a toothed portion 62 capable of transmitting the rotatory motion of the rotor or the sleeve to reduction gear means 60. Preferably toothed portion 62 is a ring-like portion which extends from one end of sleeve 48.

.64 indicates an outer ring fitted onto the inner surface of cover 38, preferably between stator 44 and pads 14.

. In accordance with a possible embodiment in which provision is made for a key 47 to prevent rotation of rotor 44, outer ring 64 can extend in sections having different cross-sections from each other to adjust to the presence of key 47.

.In accordance with a possible embodiment, outer ring 64 is inserted with play into the inner walls of cover 38. In accordance with a further embodiment outer ring 64 fits onto the inner walls of the cover with a slight interference fit.

. In accordance with a possible embodiment, further rotation-preventing means 65 are located between the walls of cover 38 and outer ring 64. A possible embodiment of the latter rotation-preventing means 65 provides that the walls of cover 38 include at least one hole 66 to house at least one dowel. Preferably three holes at 120° from each other are provided.

. In accordance with a possible embodiment, the outer ring 64 comprises a toothed annular portion 68 which faces the interior of housing 18. Preferably outer ring 64 is arranged in such a way that toothed annular portion 68 faces toothed portion 62 of rotor 46, or sleeve 48 if present.

.70 indicates a toothed planet wheel which is capable of engaging with the toothed annular portion 68 of outer ring 64 and the toothed portion 62 of rotor 46, or sleeve 48 if present.

.In accordance with a possible embodiment, two toothed planet wheels located at 180° with respect to each other are provided. In accordance with a different embodiment, three toothed planet wheels located at 120° from each other are provided.

.In accordance with a possible embodiment, each toothed planet wheel 70 incorporates a circumferential recess 72 to house an axial positioning ring 74.

.In accordance with a possible embodiment, toothed planet wheel 70 comprises a first portion 70a which can engage with outer ring 64 and rotor 46 (or sleeve 48 if present), and a second toothed portion 70b which is capable of engaging with the successive elements of reduction gear means 60. In the case where circumferential recess 72 is provided, the latter is located between first portion 70a and second portion 70b.

.In accordance with a possible embodiment, reduction gear means 60 comprise a toothed crown wheel 76, which for example is capable of engaging with portion 70b of toothed planet wheel 70 and to transmit rotary motion to nut 28.

. Advantageously, toothed crown wheel 76 is provided with a wall 78 which extends and partly envelops the aforesaid screw and nut mechanism 22, preferably coaxially therewith, and which is capable of defining at least one seat for at least one of the roller supporting members of rotor 46 or sleeve 48, if present. In accordance with a possible embodiment illustrated for example in the figures, wall 78 is advantageously capable of defining a seat for the first of the said bearings, indicated by reference 50 as previously described.

.In accordance with a possible embodiment, aforesaid wall 78 extends at least partly enclosing screw and nut mechanism 22 and is preferably coaxially inserted into rotor 46.

. In accordance with a possible embodiment in which provision is made for sleeve 48, said wall 78 is inserted into sleeve 48 and at least partly outside nut 28, defining the aforesaid seat to house first bearing 50 between the said wall and the sleeve.

. In accordance with a possible embodiment, a spacer 80 is fitted to the outer wall of nut 28.

.In accordance with a possible embodiment, wall 78 defines a seat 82 which is capable of receiving a supporting portion 83 which extends from the walls defining housing 18, in particular from first walls 36. In the case in which cylindrical seat 40 is provided for head member 30, it is advantageously provided that the aforesaid supporting portion 83 is defined by the same walls which internally define said cylindrical seat 40. Advantageously the aforesaid supporting portion is made from the part of housing 18 which faces pads 14.

.In accordance with a possible embodiment, wall 78 extends along a structure having substantially cylindrical portions of different diameters, for example decreasing in the direction from pads 14 to cover 38.

.In accordance with an advantageous embodiment toothed crown wheel 76 and wall 78 are made of a single piece connected by a flat annular member 84.

. In accordance with the example illustrated in the figures, in which the operative connection between reduction gear means 60 and screw and nut mechanism 22 is provided through aforesaid wall 78 and nut 28, the operative connection between the wall and the nut is provided through keys 85, for example two keys positioned at 180° with respect to each other.

. In accordance with a possible embodiment, reduction gear means 60 however constructed are advantageously located within housing 18 in a portion lying between electric motor 42 and pads 14. In other words, reduction gear means 60 are located opposite cover 38 with respect to motor 42 which encloses screw and nut mechanism 22.

. In accordance with a possible embodiment, reduction gear means 60 also comprise a toothed ring 86 which is preferably fitted onto wall 78. Aforesaid toothed ring 86 is capable of abutting toothed crown wheel 76 and engaging with portion 70b of planet wheel 70. In the case in which axial positioning ring 74 is provided, toothed ring 86 is advantageously fitted onto axial positioning ring 74 and is held in place by it.

.A resilient tightening or Seeger ring 87 is inserted on the end of nut 28 to hold key 85, wall 78 together with reduction gear means 60, spacer 80 and rotor 46 together as a package.

. In other words, one element of reduction gear means 60 is capable of being mounted on screw and nut mechanism 22 and constituting a member closing and containing operating means 20 within cover 38 of housing 18. In the example illustrated in the figures the aforesaid member comprises wall 78, which is preferably constructed of one piece with flat annular member 84 and toothed crown wheel 76. In accordance with a more general aspect, the member capable of providing the aforesaid closure and containment member comprises the last element in the chain of reduction gear means 60, or the element which is in direct operative connection with screw and nut mechanism 22.

. In other words reduction gear means 60 comprise an element which is capable of providing a kind of element to contain or retain the components housed in cover 38, providing a closure located on the part which is intended to face the pads.

. As for example illustrated in Figure 2, operating means 20 are housed between cover 38 and the aforesaid containment member to form a cartridge which is capable of being connected to the portion of caliper body 16 housing the pads.

. In accordance with a possible embodiment, a sensor 88 is housed within housing 18 and in particular within cover 38 between motor 42 and the cover itself. In other words, sensor 88 is housed on the side opposite pads 14 with respect to electric motor 42. In accordance with a possible embodiment sensor 88 is operatively associated with rotor 46, and in particular with sleeve 48 if provided, and performs two functions at the same time: a position sensor and a sensor of the Hall effect type for switching on the electric motor.

.In accordance with a possible embodiment, sensor 88 is mounted on an annular structure 90 associated with cover 38 and, in the case where supporting portion 54 is provided, coaxially and externally thereto.

.A description of the operation of a disk brake in accordance with this invention is provided below. Following the operation of electric motor 42, rotor 46 and as a consequence sleeve 48, if provided, are caused to rotate about longitudinal axis 24. The rotary motion of the rotor or the sleeve is transmitted through reduction gear means 60 to nut 28 and is converted therefrom into a lateral movement of screw 26 along a longitudinal axis 24. This lateral movement presses piston 30 and therefore pad 14 against the corresponding surface of the disk. In the case of a fixed pad and a floating disk, as provided for in the drawing illustrated, the thrust from the pad associated with piston 30 causes the disk to move laterally along its axis pressing it against the opposite pad.

. In particular reduction gear means 60 are structured in such a way that sleeve 48 transmits motion to planet wheel 70 and therefrom to toothed crown wheel 76 causing both wall 78 and, through key 85, nut 28 to rotate jointly.

.As illustrated in Figure 3, fitting of the disk brake according to this invention is as follows.

. Screw 26 and nut 28 define mechanism 22 onto which spacer 80, if present, is fitted. Mechanism 22 and in particular nut 28 are mounted on supporting portion 54 of cover 38 which is free to rotate about longitudinal axis 24.

. Rotor 46 and corresponding sleeve 48 with their respective bearings 50 and 52 are associated with mechanism 22 and inserted into supporting portion 54 of cover 38.

.Motor 42 is completed by inserting stator 44 which is pressed with an interference fit into cover 38 around rotor 46 and mechanism 22. The insertion of key 47 prevents the rotor from rotating with respect to cover 38.

. Outer ring 64 is inserted into cover 38 and its rotation is prevented by further rotation-preventing means 65. Finally reduction gear means 60 are mounted within housing 18, in particular within the space defined by cover 38.

.Resilient tightening or Seeger ring 87 axially locks the elements inserted in cover 38. Finally cover 38 is closed at the edge of first walls 36 and piston 30 is screwed onto screw 26.

. In the case where sensor 88 is provided, the latter is inserted into cover 38 before sleeve 48 and in general motor 42 is fitted.

. From the above it will be appreciated that the provision of a caliper for a disk brake according to this invention offers greater compactness and a great reduction in dimensions, at the same time improving the efficiency of transmitting the motion of the rotor to the screw and exerting the braking force on the disk.

. The advantageous shape and arrangement of wall 78 and toothed crown wheel 76 makes it possible to reduce the number of components necessary for construction of the brake according to this invention.

. In addition to this, the shape of toothed crown wheel 76 and wall 78 is such as to provide a kind of member to contain or retain the elements housed in cover 38, providing a closure on the side which is intended to face the pads. In fact the assembly stage is appreciably simplified in particular by providing that caliper body 16 and cover 38 form two portions which can be movably connected together in which the portion of the caliper proper comprises the pads and head member 30 comprising the piston thrusting onto the pads -which can be connected to mechanism 22, while the portion of cover 38 defines a kind of "cartridge" containing the motor, the reduction gear means, any sensors and the screw and nut mechanism which can be connected to head member 30. Wall 78, which is preferably of one piece with annular member 84 and possibly with toothed crown wheel 76, defines a member retaining and closing the "cartridge" which when inserted in resilient tightening ring 87 can easily be mounted onto the caliper body proper.

. Assembly is further' simplified by the provision of reduction gear means between the motor and the pads, that is from the part opposite the cover with respect to the motor, and in particular within a portion comprising cover 38 removably connected to the caliper body.

.In other words a kind of pre-assembled operating portion is provided within cover 38 which only has to be secured to caliper body 16 and head member or piston 30.

. In addition to the above, the disk brake according to this invention makes it possible to achieve a modular form in both the portion bringing about operation, that is the portion within cover 38, and the portion facing the disk, thanks to the presence of the caliper body and the cover and the corresponding elements contained therein which constitute two separate portions which are removably attached together.

. In particular there is a special synergy between the provision of a nut which rotates and is substantially contained within the hollow rotor and the provision of reduction gear means in the portion of the housing facing the pad. The provision of a rotating nut simplifies the construction of the caliper and makes it more compact, while maintaining the possibility of a long travel without moving the motor back, also leaving space for reduction gear means which are advantageously located where they can be rapidly checked in any maintenance work, as these are the components which are undoubtedly subject to the greatest stress. In addition to this, assembly is easier and faster and the transmission ratio can be adjusted in relation to the performance required from the brake.

. As, can be appreciated from what has been described, it is particularly advantageous to provide a brake of the electromechanical type comprising a fixed caliper associated with a disk of the floating type. This provision is particularly advantageous especially in comparison with the solution which provides for a caliper of the floating type even if the disk brake according to the invention can make provision for the use thereof.

.In fact with respect to normal calipers of the floating type, the presence of the motor inserted in a housing in the caliper body makes the caliper itself somewhat heavy. This factor first affects the dimensioning of the guides on which the caliper is suspended, so that the latter consequently has greater strength than the guides of normal calipers of the floating type which are for example operated hydraulically.

. This strength must allow not only for the greater weight of the calipers but also for the greater wear to which the guides of a floating caliper are subjected in a brake of the electromechanical type.

. For the caliper, again because of the increase in weight due to the presence of the electric motor, the caliper is more likely to stick when sliding on the guides.

. In addition to the above there is the fact that the guides of a caliper of the floating type are mounted on the fixed part, rod or suspension, onto which the vibration due to the roughness of the ground is discharged. As a result of the greater weight of the caliper in a brake of the electromechanical type in comparison with that operated hydraulically, the adverse effects of vibration on the guides is more damaging, for the same acceleration.

. The provision of a screw and a head member or piston which are separate from each other and which are connected together by means of a threaded connection and possibly an interlocking connection which also prevents relative rotation, helps to simplify the assembly, making it possible to construct it in two separate portions which can be associated together, together with joint checking of the tolerances and alignments between the screw and piston.

. Furthermore, the location of the sensor helps to restrict dimensions, limits the length of the connecting cables to the sensor and reduces the difficulty of fitting them, and provides greater protection for the sensor against dust. In addition to the above there is the fact that the aforesaid sensor located on the rotor performs two functions at the same time: a position sensor and a sensor of the Hall effect type for switching on the electric motor.

. A further advantage of the disk brake according to this invention is provided by the fact that the contrast member for transmitting the reaction force of the thrust screw in the caliper body is located on the side opposite the body with respect to the position of the disk.

. It is clear that variants and/or additions may be made to what has been described and illustrated above. Some possible variants are indicated below purely by way of example.

. Figure 6 illustrates a possible embodiment. The top part of Figure 6 shows the cross-section of a possible embodiment of the caliper in Figure 2 while the bottom part shows the cross-section of the embodiment in Figure 2 for comparison. Only some of the references in Figure 2 have been shown in Figure 6 for simplicity of illustration. Sleeve 48 has an annular extension 92 located at one end of the sleeve. This annular extension is placed against the sleeve or made of one piece with it. Pins 94 are inserted into annular extension 92 in a direction parallel to longitudinal axis 24. A planet wheel 70 is rotatably mounted on each pin 94.

. Preferably three toothed planet wheels located at 120° with respect to each other are provided.

. In accordance with a possible embodiment, toothed planet wheel 70 comprises a. first portion 70a and a toothed portion 70b, preferably of different diameters.

. A toothed ring 96 is fitted onto supporting portion 83 of first walls 36 and is capable of engaging with the second toothed portion 70b of toothed planet wheel 70.

. First portion 70a of toothed planet wheel 70 is capable of engaging with subsequent elements of reduction gear means 60, in particular with toothed crown wheel 76, which faces outwards from the caliper instead of inwards as in Figure 2 or in the bottom part of Figure 6.

. Advantageously; toothed crown wheel 76 is provided with wall 78 which extends and partly and preferably coaxially encloses the aforesaid screw and nut mechanism 22 and defines at least one seat for at least one of the rolling supporting members for rotor 46 or sleeve 48, if present. In accordance with embodiment illustrated in Figure 6, wall 78 is advantageously capable of defining a seat for the first of the said bearings, indicated by reference 50 as previously described.

. In accordance with a possible embodiment aforesaid wall 78 extends at least partly externally surrounding screw and nut mechanism 22 and is preferably coaxially inserted within rotor 46.

. In accordance with a possible embodiment in which sleeve 48 is provided, aforesaid wall 78 is inserted within sleeve- 48 and at least partly outside nut 28, defining the aforesaid seat to house first bearing 50 between the wall and the sleeve.

. Tightening ring 87 axially immobilises the reduction gear means on screw and nut mechanism 22. Again in the embodiment in Figure 6. (top part) reduction gear means 60, screw and nut mechanism 22 and motor 42 are inserted into cover 38 to form a kind of capsule which can be fixed to the walls 36 of caliper body 16.

. As an alternative, and as shown in the figures, the rotation of the rotor may be transmitted to the screw while the nut moves laterally along the longitudinal axis of the screw and nut mechanism.

. In accordance with a different embodiment the disk brake comprises a caliper of the floating type associated with a fixed disk. By a caliper of the floating type is conventionally meant a caliper in which one pad is directly pushed by operating means while the opposite pad is pushed against the corresponding surface of the disk as a result of the lateral or floating movement of the entire caliper body due to the reaction between the first pad and the disk.

. The means to prevent rotation of piston 30 may be provided in different ways. Figure 2 illustrates a key 41, while figure 6 illustrates an inclined pin 41a. Similar means may of course be provided.

. Contrary to what is illustrated in the Figures, outer ring 64 may have a transverse cross-section which is the same at every angular position, presenting a substantially axially symmetrical structure.

. Reduction gear means 60 may differ in number, shape and size from what is described and illustrated.

. The connection between the reduction gear means and the rotating member of the screw and nut mechanism may differ from what is illustrated and described.

. Preferably toothed crown wheel 76 and wall 78 are made of a single piece although provision may be made for them to be made as separate pieces coupled together. Preferably toothed crown wheel 76, annular member 84 and wall 78 are constructed in a single piece although they may be constructed of separate pieces joined together.

. In some embodiments there may be no provision for the rotor to comprise a true and proper sleeve. In this case toothed portion 62 is made from a portion of the rotor.

. A person skilled in the art may make a number of modifications, adaptations and substitutions of components with other functionally equivalent components to the preferred embodiment of the disk brake described above for the purpose of satisfying contingent and specific requirements without thereby going beyond the scope of the following claims.

## Claims

1. A caliper (12) for a disk brake (10) capable of housing pads (14) to exert a braking effect on the vehicle and comprising a body (16) containing operating means (20) for the said pads, the said caliper (12) comprising:
a first walls (36) of the caliper body (16) and a cover (38) defining an housing (18);
the said operating means (20) comprising:
a screw and nut mechanism (22), in which the said nut (28) is rotatably mounted with respect to the said housing (18) and the said screw (26) can move along a longitudinal axis (24) and is operatively associated with one of the said pads (14),
a motor (42) comprising a stator (44) and a hollow rotor (46) mounted within the said housing (18) and enclosing the said screw and nut mechanism (22), the said nut (22) being substantially within the said hollow rotor (46),
reduction gear means (60) operatively located between the said rotor (46) and the said screw and nut mechanism (22) and located in a portion lying between the said motor (42) and the said at least one pad (14),
the said screw and nut mechanism (22), the said motor (42) and the said reduction gear means (60) being capable of being housed within the said cover (38) defining the said housing (18) and of being held therein to form a cartridge which is capable of being mounted on the first walls (36) of the caliper body (16), in which the said rotor (46) is also mounted so as to rotate with respect to a supporting portion (54) operatively associated with the said housing (18),
**characterized in that**
the said supporting portion (54) is associated with the said cover (38) of the said housing (18) on the side opposite the at least one pad (14), and
the said supporting portion (54) is internally capable of defining at least one seat for at least one roller supporting member (59) for the said nut (28) rotatably mounted with respect to the said housing (18).

2. A caliper according to claim 1, in which one element (76, 78) of the said reduction gear means (60) extends partly within the said rotor (46) and defines at least one seat for at least one roller supporting member (50) for the said rotor (46).

3. A caliper according to claim 2, in which the said reduction gear means (60) comprises a toothed crown wheel (76) provided with a wall (78) which extends within the said rotor (46).

4. A caliper according to claim 3, in which the said wall (78) extends at least partly enclosing the said screw and nut mechanism (22).

5. A caliper according to claim 3 or 4, in which the said wall (78) extends and coaxially enters the rotor (46).

6. A caliper according to one of claims from 3 to 5, in which the said wall (78) defines a hollow seat (82) capable of receiving a supporting portion (83) which extends from the first walls (36) defining the said housing (18).

7. A caliper according to claim 6, in which the said supporting portion (83) is constructed in said first walls (36) of the caliper body (16).

8. A caliper according to one of claims from 3 to 7, in which the said wall (78) comprises cylindrical portions having different diameters.

9. A caliper according to one of claims from 3 to 8, in which the said wall (78) and the said toothed crown wheel (76) are constructed in a single piece.

10. A caliper according to one of claims from 3 to 9, in which the said one element (76, 78) is the last of the said reduction gear means (60) operatively connected to the said nut (28) to cause it to rotate about the said longitudinal axis (24).

11. A caliper according to claim 10, in which the said one element (76, 78) is operatively connected to the said nut (28) and extends at least partly overlapping the outside thereof.

12. A caliper according to claim 11, in which the said operative connection between the said one element (76, 78) and the said nut (28) is provided through at least one key (85).

13. A caliper according to one of the preceding claims, in which a spacer (80) fitted onto the said screw and nut mechanism (22) is provided.

14. A caliper according to claim 1, in which the said supporting portion (54) comprises a substantially cylindrical structural member inserted into an opening (56) in the said cover (38) and extends within the said housing (18).

15. A caliper according to claims 1 or 14, in which the said supporting portion (54) is externally capable of defining at least one seat for at least one further roller supporting member (52) for the said rotor (46).

16. A caliper according to one of the preceding claims, in which the said rotor (46) comprises a sleeve (48) which encloses the said screw and nut mechanism (22).

17. A caliper according to claim 16, in which said one element (76, 78) of the said reduction gear means (60) is inserted within the said sleeve (48).

18. A caliper according to claim 16 or 17, in which the said sleeve (48) comprises a toothed portion (62) which is capable of transmitting motion to the said reduction gear means (60).

19. A caliper according to claim 18, in which the said reduction gear means (60) comprise at least one toothed planet wheel (70).

20. A caliper according to claim 19, in which two toothed planet wheels (70) located at 180° with respect to each other are provided.

21. A caliper according to claim 19, in which three toothed planet wheels (70) located at 120° with respect to each other are provided.

22. A caliper (10) according to one of claims from 19 to 21, in which the said at least one toothed planet wheel (70) comprises a circumferential recess (72) to house an axial positioning ring (74) .

23. A caliper according to one of the preceding claims, in which the said reduction gear means (60) comprise a toothed ring (86) mounted on said one element (76, 78) of the reduction gear means.

24. A caliper according to claim 23, in which the said toothed ring (86) is fitted onto the said axial positioning ring (74).

25. A caliper according to one of the preceding claims, in which the said reduction gear means (60) comprise an outer ring (64) inserted into the housing (18).

26. A caliper according to one of the preceding claims, in which provisions is made for a sensor (88) facing the said rotor (46) and located on the side opposite the pads (14) with respect to the motor (42).

27. A caliper according to one of the preceding claims, in which the said disk (13) is of the floating type and the said caliper (12) is of the fixed type.

28. A caliper according to one of claims from 1 to 26, in which the said caliper (12) is of the floating type and the said disk (13) is of the fixed type.

29. A caliper according to one of claims from 10 to 29, in which a resilient tightening ring (87) axially immobilises the said last element (76, 78) of the said reduction gear means (60) on the said screw and nut mechanism (22) .

## Patentansprüche

1. Bremssattel (12) für eine Scheibenbremse (10), der Bremsklötze (14) aufnehmen kann, um eine Bremswirkung auf ein Fahrzeug auszuüben, und der einen Körper (16) umfasst, der Betätigungsmittel (20) für die Bremsklötze enthält, wobei der Bremssattel (12) umfasst:
erste Wände (36) des Bremssattelkörpers (16) und eine Abdeckung (38), die ein Gehäuse (18) definieren;
wobei das Betätigungsmittel (20) umfasst:
einen Schraube-und-Mutter-Mechanismus (22), in welchem die Mutter (28) drehbar bezüglich des Gehäuses (18) montiert ist und die Schraube (26) längs einer Longitudinalachse (24) bewegt werden kann und operativ einem der Bremsklötze (14) zugeordnet ist,
einen Motor (42), der einen Stator (44) und einen hohlen Rotor (46) umfasst, die innerhalb des Gehäuses (18) montiert sind und den Schraube-und-Mutter-Mechanismus (22) umschließen, wobei die Mutter (22) sich im Wesentlichen innerhalb des hohlen Rotors (46) befindet,
Untersetzungsgetriebemittel (60), die operativ zwischen dem Rotor (46) und dem Schraube-und-Mutter-Mechanismus (22) angeordnet sind und in einem Abschnitt angeordnet sind, der zwischen dem Motor (42) und dem wenigstens einen Bremsklotz (14) liegt,
wobei der Schraube-und-Mutter-Mechanismus (22), der Motor (42) und das Untersetzungsgetriebemittel (60) innerhalb der Abdeckung (38), die das Gehäuse (18) definiert, aufgenommen und darin gehalten werden können, um eine Kassette zu bilden, die an den ersten Wänden (36) des Bremssattelkörpers (16) montiert werden kann, in welchem der Rotor (46) ebenfalls montiert wird, um somit bezüglich eines Unterstützungsabschnitts (54), der dem Gehäuse (18) operativ zugeordnet ist, zu rotieren,
**dadurch gekennzeichnet, dass**
der Unterstützungsabschnitt (54) der Abdeckung (38) des Gehäuses (18) auf der Seite, die dem wenigstens einen Bremsklotz (14) gegenüberliegt, zugeordnet ist, und
der Unterstützungsabschnitt (54) intern fähig ist, wenigstens einen Sitz für wenigstens ein Rollenunterstützungselement (59) für die Mutter (28), die drehbar bezüglich des Gehäuses (18) montiert ist, zu definieren.

2. Bremssattel nach Anspruch 1, in welchem ein Element (76, 78) der Untersetzungsgetriebemittel (60) sich teilweise innerhalb des Rotors (46) erstreckt und wenigstens einen Sitz für wenigstens ein Rollenunterstützungselement (50) für den Rotor (46) definiert.

3. Bremssattel nach Anspruch 2, in welchem die Untersetzungsgetriebemittel (60) ein gezahntes Kronenrad (76) umfassen, das mit einer Wand (78) versehen ist, die sich innerhalb des Rotors (46) erstreckt.

4. Bremssattel nach Anspruch 3, in welchem die Wand (78) wenigstens teilweise den Schraube-und-Mutter-Mechanismus (22) umschließend verläuft.

5. Bremssattel nach Anspruch 3 oder 4, in welchem die Wand (78) sich erstreckt und koaxial in den Rotor (46) eintritt.

6. Bremssattel nach irgendeinem der Ansprüche 3 bis 5, in welchem die Wand (78) einen hohlen Sitz (82) definiert, der einen Unterstützungsabschnitt (83) aufnehmen kann, der sich von den ersten Wänden (36), die das Gehäuse (18) definieren, ausgehend erstreckt.

7. Bremssattel nach Anspruch 6, in welchem der Unterstützungsabschnitt (83) in den ersten Wänden (36) des Bremssattelkörpers (16) konstruiert ist.

8. Bremssattel nach irgendeinem der Ansprüche 3 bis 7, in welchem die Wand (76) zylindrische Abschnitte mit verschiedenen Durchmessern umfasst.

9. Bremssattel nach irgendeinem der Ansprüche 3 bis 8, in welchem die Wand (78) und das gezahnte Kronenrad (76) in einem einzigen Stück konstruiert sind.

10. Bremssattel nach irgendeinem der Ansprüche 3 bis 9, in welchem das eine Element (76, 78) das letzte der Untersetzungsgetriebemittel (60) ist, das mit der Mutter (28) operativ verbunden ist, um diese zu veranlassen, um die Longitudinalachse (24) zu rotieren.

11. Bremssattel nach Anspruch 10, in welchem das eine Element (76, 78) mit der Mutter (28) operativ verbunden ist und sich wenigstens teilweise deren Außenseite überlappend erstreckt.

12. Bremssattel nach Anspruch 11, in welchem die operative Verbindung zwischen dem einen Element (76, 78) und der Mutter (28) über wenigstens einen Keil (85) vorgesehen ist.

13. Bremssattel nach irgendeinem der vorangehenden Ansprüche, in welchem ein Abstandhalter (80) auf den Schraube-und-Mutter-Mechanismus (22) aufgesetzt ist.

14. Bremssattel nach Anspruch 1, in welchem der Unterstützungsabschnitt (54) ein im Wesentlichen zylindrisches Bauelement umfasst, das in eine Öffnung (56) in der Abdeckung (38) eingesetzt ist und sich innerhalb des Gehäuses (18) erstreckt.

15. Bremssattel nach Anspruch 1 oder 14, in welchem der Unterstützungsabschnitt (54) wenigstens einen Sitz für wenigstens ein weiteres Rollenunterstützungselement (52) für den Rotor (46) extern definieren kann.

16. Bremssattel nach irgendeinem der vorangehenden Ansprüche, in welchem der Rotor (46) eine Hülse (48) umfasst, die den Schraube-und-Mutter-Mechanismus (22) umschließt.

17. Bremssattel nach Anspruch 16, in welchem das eine Element (76, 78) des Untersetzungsgetriebemittels (60) innerhalb der Hülse (48) eingesetzt ist.

18. Bremssattel nach Anspruch 16 oder 17, in welchem die Hülse (48) einen gezahnten Abschnitt (62) umfasst, der eine Bewegung auf das Untersetzungsgetriebemittel (60) übertragen kann.

19. Bremssattel nach Anspruch 18, in welchem das Untersetzungsgetriebemittel (60) wenigstens ein gezahntes Planetenrad (70) umfasst.

20. Bremssattel nach Anspruch 19, in welchem zwei gezahnte Planetenräder (70) vorgesehen sind, die zueinander um 180° versetzt angeordnet sind.

21. Bremssattel nach Anspruch 19, in welchem drei gezahnte Planetenräder (70) vorgesehen sind, die zueinander um 120° versetzt angeordnet sind.

22. Bremssattel (10) nach irgendeinem der Ansprüche 19 bis 21, in welchem das wenigstens eine gezahnte Planetenrad (70) eine Umfangsaussparung (72) zum Aufnehmen eines Axialpositionierungsrings (74) umfasst.

23. Bremssattel nach irgendeinem der vorangehenden Ansprüche, in welchem das Untersetzungsgetriebemittel (60) einen gezahnten Ring (86) umfasst, der auf dem einen Element (76, 78) des Untersetzungsgetriebemittels montiert ist.

24. Bremssattel nach Anspruch 23, in welchem der gezahnte Ring (86) auf den Axialpositionierungsring (74) aufgesetzt ist.

25. Bremssattel nach irgendeinem der vorangehenden Ansprüche, in welchem das Untersetzungsgetriebemittel (60) einen Außenring (64) umfasst, der in das Gehäuse (18) eingesetzt ist.

26. Bremssattel nach irgendeinem der vorangehenden Ansprüche, in welchem Vorkehrungen getroffen sind für einen Sensor (88), der dem Rotor (46) zugewandt ist und bezüglich des Motors (42) auf der den Bremsklötzen (14) gegenüberliegenden Seite angeordnet ist.

27. Bremssattel nach irgendeinem der vorangehenden Ansprüche, in welchem die Scheibe (13) dem schwimmenden Typ entspricht und der Bremssattel (12) dem ortsfesten Typ entspricht.

28. Bremssattel nach irgendeinem der Ansprüche 1 bis 26, in welchem der Bremssattel (12) dem schwimmenden Typ entspricht und die Scheibe (13) dem ortsfesten Typ entspricht.

29. Bremssattel nach irgendeinem der Ansprüche 10 bis 29, in welchem ein elastischer Spannring (87) das letzte Element (76, 78) des Untersetzungsgetriebemittels (60) auf dem Schraube-und-Mutter-Mechanismus (22) axial festsetzt.

## Revendications

1. Etrier (12) pour un frein à disque (10) pouvant loger des plaquettes (14) servant à exercer un effet de freinage sur le véhicule et comprenant un corps (16) contenant un moyen (20) de mise en oeuvre desdites plaquettes, ledit étrier (12) comprenant :
des premières parois (36) du corps (16) d'étrier et un élément de recouvrement (38) définissant un boîtier (18) ;
ledit moyen (20) de mise en oeuvre comprenant:
un mécanisme (22) de vis et d'écrou, dans lequel ledit écrou (28) est monté mobile en rotation par rapport audit boîtier (18) et ladite vis (26) peut être mue le long d'un axe longitudinal (24) et est associée de manière fonctionnelle à l'une desdites plaquettes (14),
un moteur (42) comprenant un stator (44) et un rotor creux (46) monté à l'intérieur dudit boîtier (18) et confinant ledit mécanisme (22) de vis et d'écrou, ledit écrou (22) se trouvant sensiblement à l'intérieur dudit rotor creux (46),
des moyens (60) de renvoi disposés de manière fonctionnelle entre ledit rotor (46) et ledit mécanisme (22) de vis et d'écrou et positionnés dans une partie se trouvant entre ledit moteur (42) et ladite au moins une plaquette (14),
ledit mécanisme (22) de vis et d'écrou, ledit moteur (42) et lesdits moyens (60) de renvoi pouvant être logés à l'intérieur dudit élément de recouvrement (38) définissant ledit boîtier (18) et pouvant y être maintenus pour former une cartouche qui peut être montée sur les premières parois (36) du corps (16) d'étrier, dans lequel ledit rotor (46) est également monté de façon à tourner par rapport à une partie (54) de support associée de manière fonctionnelle audit boîtier (18),
**caractérisé en ce que**
ladite partie (54) de support est associée audit élément de recouvrement (38) dudit boîtier (18) du côté opposé à l'au moins une plaquette (14), et
ladite partie (54) de support peut définir intérieurement au moins un logement destiné à au moins un élément (59) de support de rouleau dudit écrou (28) monté mobile en rotation par rapport audit boîtier (18).

2. Etrier selon la revendication 1, dans lequel un élément (76, 78) desdits moyens (60) de renvoi s'étend partiellement à l'intérieur dudit rotor (46) et définit au moins un logement destiné à au moins un élément (50) de support de rouleau dudit rotor (46).

3. Etrier selon la revendication 2, dans lequel lesdits moyens (60) de renvoi comprennent une couronne d'entraînement dentée (76) pourvue d'une paroi (78) qui s'étend à l'intérieur dudit rotor (46).

4. Etrier selon la revendication 3, dans lequel ladite paroi (78) s'étend au moins en confinant partiellement ledit mécanisme (22) de vis et d'écrou.

5. Etrier selon la revendication 3 ou 4, dans lequel ladite paroi (78) s'étend et pénètre coaxialement le rotor (46).

6. Etrier selon l'une des revendications 3 à 5, dans lequel ladite paroi (78) définit un logement creux (82) pouvant recevoir une partie (83) de support qui s'étend des premières parois (36) définissant ledit boîtier (18).

7. Etrier selon la revendication 6, dans lequel ladite partie (83) de support est réalisée dans lesdites premières parois (36) dudit corps (16) d'étrier.

8. Etrier selon l'une des revendications 3 à 7, dans lequel ladite paroi (78) comprend des parties cylindriques ayant des diamètres différents.

9. Etrier selon l'une des revendications 3 à 8, dans lequel ladite paroi (78) et ladite couronne d'entraînement dentée (76) sont réalisées d'une seule pièce.

10. Etrier selon l'une des revendications 3 à 9, dans lequel ledit un élément (76, 78) est le dernier desdits moyens (60) de renvoi en prise fonctionnelle avec ledit écrou (28) pour le faire tourner autour dudit axe longitudinal (24).

11. Etrier selon la revendication 10, dans lequel ledit un élément (76, 78) est en prise fonctionnelle avec ledit écrou (28) et s'étend en en recouvrant au moins partiellement la partie extérieure.

12. Etrier selon la revendication 11, dans lequel ladite prise fonctionnelle entre ledit un élément (76, 78) et ledit écrou (28) est obtenue par au moins une clavette (85).

13. Etrier selon l'une des revendications précédentes, dans lequel on a prévu un écarteur (80) monté sur ledit mécanisme (22) de vis et d'écrou.

14. Etrier selon la revendication 1, dans lequel ladite partie (54) de support comprend un élément structurel sensiblement cylindrique introduit dans une ouverture (56) réalisée dans ledit élément de recouvrement (38) et s'étend à l'intérieur dudit boîtier (18).

15. Etrier selon la revendication 1 ou 14, dans lequel ladite partie (54) de support peut définir extérieurement au moins un logement destiné à au moins un élément (52) de support de rouleau supplémentaire dudit rotor (46).

16. Etrier selon l'une des revendications précédentes, dans lequel ledit rotor (46) comprend un manchon (48) qui confine ledit mécanisme (22) de vis et d'écrou.

17. Etrier selon la revendication 16, dans lequel ledit un élément (76, 78) desdits moyens (60) de renvoi est introduit à l'intérieur dudit manchon (48).

18. Etrier selon la revendication 16 ou 17, dans lequel ledit manchon (48) comprend une partie dentée (62) qui peut transmettre un mouvement auxdits moyens (60) de renvoi.

19. Etrier selon la revendication 18, dans lequel lesdits moyens (60) de renvoi comprennent au moins une roue planétaire dentée (70).

20. Etrier selon la revendication 19, dans lequel on a prévu deux roues planétaires dentées (70) disposées à 180° l'une par rapport à l'autre.

21. Etrier selon la revendication 19, dans lequel on a prévu trois roues planétaires dentées (70) disposées à 120° les unes par rapport aux autres.

22. Etrier (10) selon l'une des revendications 19 à 21, dans lequel ladite au moins une roue planétaire dentée (70) comprend un évidement circonférentiel (72) servant à loger une bague (74) de positionnement axial.

23. Etrier selon l'une des revendications précédentes, dans lequel lesdits moyens (60) de renvoi comprennent une bague dentée (86) montée sur ledit un élément (76, 78) des moyens de renvoi.

24. Etrier selon la revendication 23, dans lequel ladite bague dentée (86) est montée sur ladite bague (74) de positionnement axial.

25. Etrier selon l'une des revendications précédentes, dans lequel lesdits moyens (60) de renvoi comprennent une bague extérieure (64) introduite dans le boîtier (18) .

26. Etrier selon l'une des revendications précédentes, dans lequel on a prévu un capteur (88) faisant face audit rotor (46) et disposé du côté opposé aux plaquettes (14) par rapport au moteur (42).

27. Etrier selon l'une des revendications précédentes, dans lequel ledit disque (13) est du type flottant et ledit étrier (12) est du type fixe.

28. Etrier selon l'une des revendications 1 à 26, dans lequel ledit étrier (12) est du type flottant et ledit disque (13) est du type fixe.

29. Etrier selon l'une des revendications 10 à 29, dans lequel une bague élastique (87) de serrage immobilise axialement ledit dernier élément (76, 78) desdits moyens (60) de renvoi sur ledit mécanisme (22) de vis et d'écrou.
